# EUROPÄISCHE PATENTSCHRIFT

(11) **EP 1 837 162 B1**
(45) Veröffentlichungstag und Bekanntmachung des Hinweises auf die Patenterteilung: **01.10.2008**
(21) Anmeldenummer: 07005788.0
(22) Anmeldetag: 21.03.2007
(51) Int. Cl.: B29C 65/08, B65B 51/22, C08J 5/18

(54) **Ultraschall-schweißbare thermoplastische Polyolefinfolie**
Ultrasonically weldable thermoplastic polyolefin films
Feuille de polyoléfine thermoplastique pouvant être blanchie par ultrasons

(30) Priorität: 21.03.2006 DE 102006013249
(43) Veröffentlichungstag der Anmeldung: 26.09.2007
(73) Patentinhaber: RKW AG Rheinische Kunststoffwerke, 67547 Worms (DE)
(72) Erfinder: Pfeiffer, Markus, 91572 Bechhofen (DE)
(74) Vertreter: Wagner, Jutta

(56) Entgegenhaltungen:
- WO-A-03/008190
- WO-A-03/011961
- US-B1- 6 271 155
- US-B1- 6 287 705

## Beschreibung

Die vorliegende Erfindung betrifft die Verwendung von Polyolefinfolien zur Herstellung von Verpackungen und Verpackungen aus Polyolefinfolien.

Flexible Verpackungen in Form von Beuteln verdrängen zunehmend die noch gängigen Faltschachteln, Dosen aus Weißblech, Gläser und starren Kunststoffbehälter. Denn Beutelverpackungen sind leicht, verbrauchen wenig Packstoff und werden vom Endverbraucher gut angenommen. Sie gewährleisten gewichts- und mengenmäßig den geringsten Packstoffverbrauch, sowie ein hohes Maß an Dichtheit und Sterilität bei hohen Abpackleistungen. Zudem sind Beutelverpackungen einfacher zu recyceln.

Der größte Anteil der handelsüblichen Beutelverpackungen entfällt auf Schlauchbeutel, die auf vertikalen Form-Füll-Siegelmaschinen (vFFS) entstehen. Dabei wird die flache Packstoffbahn von der Rolle eingezogen, über eine Formschulter geführt, zum Schlauch geformt, in der Längsrichtung verschlossen, gefüllt, anschließend quer verschlossen und gleichzeitig abgetrennt. Die Siegelung der Kopfnaht und der Bodennaht des nächsten Beutels erfolgt im gleichen Produktionsschritt. Mit angepassten Siegelwerkzeugen und durch individuelle Gestaltung der Werkzeugprofile lassen sich mit dem FFS-Verfahren die unterschiedlichsten Beutelformen herstellen. Dabei hat vor allem die Quersiegelstation maßgeblichen Einfluss auf die Nahtqualität und den gesamten Packungsprozess. Hier treten erfahrungsgemäß die meisten Fehler auf, hauptsächlich Leckagen. Die häufigsten Ursachen dafür sind Produktreste im Nahtbereich, durch Werkzeug oder Führung lädierte Folien, ferner Siegelparameter, die außerhalb des Toleranzbereiches liegen. Bei den immer kürzer werdenden Kontaktzeiten - eine Folge zunehmender Produktionsgeschwindigkeiten - rückt die Qualität der Quernaht zunehmend ins Blickfeld der Verpackungsmaschinenbauer. Denn Beuteldefekte durch Leckagen verursachen dem Verpacker mitunter hohe Kosten und ziehen Imageverluste beim Kunden nach sich.

Zum Verschließen der Beutel wird anstelle der bisher üblichen thermischen Siegelung zunehmend die Ultraschall-Schweißtechnik verwendet. Der Grund hierfür liegt in Effizienzsteigerungen entsprechend ausgerüsteter Verpackungsmaschinen von bis zu 40%. Gegenüber thermischen Schweißverfahren hat das Ultraschallprinzip einige weitere Vorteile: keine Wärmebelastung der Fügezone und des Füllguts, geringere Ausfallzeiten durch Reinigung, keine Aufheizphase und weniger Energieverbrauch. Bei pulverförmigen Produkten lässt sich trotz statischer Aufladung der Folie eine hohe Siegelqualität gewährleisten. Ebenso ist bei Flüssigkeiten eine schnelle Taktfolge mit hoher Zuverlässigkeit möglich, auch bei problematischen Inhalten mit hohem Fett-, Öl- oder Eiweißanteil wie Fetten und Soßen. Selbst bei faserigen Medien, z.B. Sauerkraut und Gemüsesuppen, ist die hohe Nahtqualität gewährleistet, da das Ultraschallverfahren praktisch durch das Produkt "hindurchschweißt". Dagegen würde ein Sauerkrautfaden beispielsweise in der Siegelzone einer thermischen Schweißvorrichtung unweigerlich die Undichtigkeit des Beutels nach sich ziehen. Zudem sind die Ultraschall-Siegeleinheiten kompakt und niedrig. Besonders bei unterschiedlich langen Längsnähten stellt das kontinuierlich schweißende Längsnahtmodul eine Platz sparende Lösung dar. Auch zusätzliche Applikationen wie Ventil und Ausgießer lassen sich per Ultraschall anbringen.

Als Packstoff für die Ultraschall-Schweißtechnik werden derzeit nahezu ausschließlich Verbundwerkstoffe, typischerweise Laminate aus siegelbaren Kunststofffolien mit Papier, Aluminium oder sehr hochschmelzenden Kunststofffolien, z.B. aus Polyethylenterephthalat verwendet. Diese Materialien sind aufwändig und damit kostenintensiv in der Herstellung. Die im Bereich der Wärmeschweißtechnik üblichen Mono-Folien, z.B. basierend auf Mischungen aus Ethylenvinylacetat und linearem Polyethylen niederer Dichte, und coextrudierten Folien, z.B. aus linearem Polyethylen niederer Dichte als mittlerer Schicht und Polyethylen niederer Dichte als äußerer Schicht, sind wegen des anderen Wirkprinzips für die Ultraschall-Schweißtechnik nicht geeignet. Während beim Wärmekontaktverfahren die Energie, die für eine Siegelung bzw. Schweißung nötig ist, von außen durch Heizelemente eingebracht wird, wird beim Ultraschall-Schweißen die Energie an der Grenzfläche der zu siegelnden Innenseiten erzeugt.

Es werden zwar bereits Laminate aus coextrudierten Polyolefinfolien kaschiert mit Papier, Aluminium etc. eingesetzt, bei denen die Polyolefinfolie z.B. auf Ethylencopolymeren wie linearem Polyethylen niederer Dichte, gegebenenfalls in Verbindung mit Polyethylen hoher Dichte, basiert, im Ultraschall-Schweißverfahren eingesetzt. Ohne eine wärmeformbeständige Schicht sind diese Folien aber nicht als Verpackung brauchbar.

Bei Verpackungen, die ohnehin z.B. wegen einer erforderlichen Gas- oder Wasserdampfdichtigkeit nur aus Laminaten z.B. mit Aluminium herstellbar sind, stellt die Beschränkung der Packstoffmaterialen bei der Ultraschall-Schweißtechnik keinen Nachteil dar. Eine große Vielzahl an Produkten erfordert aber keine derart aufwändige Verpackung. Die beim Wärmekontaktverfahren üblichen, wesentlich günstigeren Polyolefinfolien bzw. Polyolefinfolienverbunde würden ausreichen. Aus Kostengründen und wegen des leichteren Recyclings wären daher auch im Bereich der Ultraschall-Schweißtechnik in einem Arbeitsgang herstellbare Folien, also Monofolien oder coextrudierte Folien, als Material wünschenswert.

Es bestand daher die Aufgabe, Folien anzugeben, welche sich als Packstoffmaterial für die Ultraschall-Schweißtechnik eignen.

Überraschend wurde gefunden, dass Polyolefinfolien aus bestimmten Propylencopolymeren, aus Mischungen von mindestens zwei verschiedenen Polyolefinen sowie coextrudierte Folien mit mindestens einer Lage aus Polypropylen, gegebenenfalls mit bis zu 50 % Polyethylen gemischt, und einer zweiten Lage aus Polyethylen im Ultraschall-Schweißverfahren siegelbare Verpackungen ergeben.

Aus WO 03/008190 sind zwar mehrschichtige Folien, bei denen die Polypropylen bzw. Polyethylen der Schichten einen Schmelzpunktsunterschied von wenigstens 10 °C haben, bekannt. Diese Materialien werden aber zur Band- oder Gamherstellung vorgeschlagen, was keine Rückschlüsse auf eine Siegelbarkeit mittels Ultraschall zulässt.

Die obige Aufgabe wird daher gelöst durch die Verwendung von Folien aus einem Propylencopolymer mit einem Anteil von 1 bis 30 Gew.-% Ethylenmonomeren, wobei dem Propylenanteil ein um mindestens 13 K höher liegender Peak im DSC entspricht als dem Ethylenanteil, oder durch Folien aus einer Mischung aus 50 bis 90 Gew.-% eines Polypropylens und 10 bis 50 Gew.-% eines Polyethylens, wobei dem Polypropylen ein um mindestens 20 K höher liegender Peak im DSC entspricht als dem Polyethylen, oder von coextrudierten Folien, die mindestens eine erste Lage aus Polyethylen und eine zweite Lage aus Polypropylen umfassen, wobei dem Polypropylen ein um mindestens 20 K höher liegender Peak im DSC entspricht als dem Polyethylen.

Das niedriger schmelzende Polymere bzw. der niedriger schmelzende Anteil hat vorzugweise eine Schmelztemperatur von 100 °C bis 130 °C, vorzugsweise von 110 °C bis 120 °C.

Die Schmelztemperaturen werden mittels DSC (Differential Scanning Calorimetry) analog DIN 53765 bestimmt. Die DSC ist eine thermoanalytische Methode, bei der die Differenz der Wärmeströme in einer Probe und einer Referenz in Abhängigkeit der Temperatur und Zeit gemessen wird, wenn die Probe und die Referenz einem geregelten Temperatur-Zeit-Programm unterworfen sind. Eine Schmelztemperatur wird daher im Rahmen der Erfindung als endothermer Peak im DSC definiert.

Die Messungen der Schmelztemperaturen werden an den Folien vorgenommen. Hierzu werden aus einem Folienstück mittels Probenlochzange ca. 2 - 4 mg ausgestanzt und in einen Aluminiumtiegel (40 µl) eingewogen. Anschließend wird der Aluminiumtiegel mit der Folie mit einem gelochten Aluminiumdeckel verschlossen. Bei der Messung für Polyethylen bzw. Polypropylen wird die Probe im Tiegel zuerst von 40 °C auf 220 °C mit einer konstanten Steigerung von 100 °C/min. erwärmt, bleibt eine Minute lang bei 220 °C und wird dann in 10 °C/min Schritten abgekühlt, bis die Temperatur wieder auf 40 °C gesunken ist. Nun wird die Probe 5 Minuten bei lang bei 40 °C gehalten. Anschließend steigert man die Temperatur wieder von 40 °C auf 220 °C, jedoch mit der Geschwindigkeit von 10°C/min. und lässt die Probe am Maximum noch 1 Minute ruhen. Die Messungen werden in Raumluft durchgeführt. Die Schmelztemperatur wird aus der Abhängigkeit der gemessenen Probentemperatur von der Energiezufuhr ("endotherme" Kurve) beim zweiten Aufheizen ermittelt.

Die Folien ergeben Siegelnähte mit Festigkeiten von ≥ 10 N/15 mm, vorzugsweise ≥ 12 N/ 15 mm, bestimmt nach Verpackungs-Rundschau, (9) 1978, S. 72 - 73, Merkblatt 33 FHG, bzw. die Siegelnaht geht in Dehnung bei entsprechenden Kräften oder reißt ab.

Die erfindungsgemäßen Folien sind einfach und damit kostengünstig herzustellen. Da nur Polyolefine verwendet werden ist auch die Wiederverwertung gut möglich bzw. eine Entsorgung unproblematisch. Im Vergleich zum Wärmekontaktverfahren sind im Ultraschallverfahren dünnere Folien brauchbar, so dass zusätzlich eine Kostenersparnis durch verringerten Rohstoffaufwand möglich ist.

Die Dicke der Folien richtet sich vor allem nach dem Anwendungszweck. Sie wird einerseits von den notwendigen mechanischen Eigenschaften bestimmt und soll andererseits schon aus Kostengründen so gering wie möglich sein. Bei Verpackungsbeuteln sind ca. 30 bis 150 µm üblich. Bei Verpackungen für Tiefkühlgut, besonders wenn es scharfkantig ist, kommen Folien mit Dicken von 25 bis 200 µm zum Einsatz, abgestimmt auf Füllgut, Füllgewicht und Beutelgröße.

Bei den erfindungsgemäßen Folien werden die Materialien so ausgewählt, dass die Hauptkomponente des Copolymers einen um 13 K bzw. die Hauptkomponente der Mischung einen um 20 K höheren Schmelzpunkt, d.h. Peak im DSC, als den der Unterschusskomponente aufweist. Es hat sich gezeigt, dass nur unter diesen Umständen Folien erhalten werden, die im Ultraschallschweißverfahren ausreichend feste Siegelnähte ergeben. Bei den erfindungsgemäßen Folien ist zudem das Verhalten bei Erreichen der Belastungsgrenze verbessert, die Folie reißt an der Sieglenaht ab oder dehnt sich und schält sich nicht ab (Peel).

Die erfindungsgemäß entscheidenden Schmelzpunktsunterschiede können auf drei Arten realisiert werden, einmal in Copolymeren, zum Zweiten in Polymermischungen und zum Dritten in coextrudierten Folien durch verschiedene Polymere in den einzelnen Schichten.

Bei den Copolymeren handelt es sich erfindungsgemäß um Propylencopolymere mit Ethylen als Comonomer. Der Anteil an Ethylen beträgt 1 bis 30 Gew.-%, vorzugsweise 5 bis 20 Gew.-%.

Die Mischungen enthalten Polypropylen und Polyethylen, wobei der Polypropylenanteil 50 bis 90 Gew.-%, vorzugsweise 65 bis 85 Gew.-% beträgt. Der Polyethylenanteil beträgt vorzugsweise 20 bis 50 Gew.-%, insbesondere 20 bis 30 Gew.-%. Sowohl das Polypropylen als auch das Poylethylen kann ein Homopolymer oder ein Copolymer sein. So kommen neben Propylenhomopolymeren auch Propylencopolymere mit z.B. Ethylen in Betracht. Als Polyethylen können Polyethylene hoher oder niederer Dichte, lineare Polyethylene niederer Dichte, besonders bevorzugt mittels Metallocen-Katalysator hergestellte lineare Polyethylene niederer Dichte, oder Ethylenvinylacetate verwendet werden. Es kann sich sowohl bei dem Polypropylen als auch bei dem Polyethylen um Mischungen der genannten Polymere handeln.

Die coextrudierten Folien weisen zumindest zwei Schichten auf, eine aus Polypropylen und die zweite aus Polyethylen. Bei den Materialien der Schichten der coextrudierten Folien kommen die bereits zuvor als Bestandteile der Mischung beschriebenen Polypropylen und Polyethylene in Betracht. Die Polypropylenschicht kann zusätzlich bis zu 50 Gew.-%, vorzugsweise bis zu 30 Gew.-%, insbesondere 10 bis 30 Gew.-% Polyethylen enthalten. Bei dem Polyethylen handelt es sich z.B. um Polyethylen hoher oder niederer Dichte oder lineares Polyethylen niederer Dichte, insbesondere um Metallocen-katalysiert hergestelltes lineares Polyethylen niederer Dichte. Vorzugsweise enthält die zweite Lage bis zu 40 Gew.-%, insbesondere bis zu 20 Gew.-% Polyethylen niederer Dichte und/oder Ethylenvinylacetat.

Die erfindungsgemäße Folie kann neben dem Polymer ein oder mehrere weitere an sich bekannte Additive enthalten, wie z.B. Lichtschutzmittel, UV-Absorber, IR-Absorber, Flammhemmer, Antioxidantien, Thermostabilisatoren, Metalldesaktivatoren, Verarbeitungshilfen, Extrusionshilfen, Säurefänger, Prozessstabilisatoren, Gleitmittel, Entformungsmittel, Slip-Mittel, Antislip-Mittel, Antistatika, Antitaumittel, Antifoggingmittel, Nukleierungsmittel, Clarifier, Keimbildner, Antiblockmittel, Haftungsmittel, Treibmittel, Antimikrobielle Wirkstoffe, Füllstoffe, Opazitätserzeuger, Lasersensitiver, Polymerabbaubeschleuniger, Verträglichkeitsmacher, Antihaftmittel, Feuchtigkeitsbinder, Avivageersatz, Optische Aufheller, Vemetzungshilfsmittel, Hydrophilierungsmittel, Hydrophobierungsmittel, Farben, Pigmente, Farbstoffe. Vorzugsweise werden Additive als Masterbatch zugesetzt. Es werden die üblichen Mengen verwendet, typischerweise bis zu 10 Gew.-%. In weiß eingefärbten Folien sind üblicherweise bis zu 30 Gew.-%, vorzugsweise bis zu 25 Gew.-% Masterbatch des Farbstoffs enthalten.

Bei Folien, die bedruckt werden sollen, ist es bevorzugt die Folienoberfläche mit einer Coronaentladung zu behandeln. Auch eine Plasma- oder Flammvorbehandlung ist geeignet.

Eine Corona-, Plasma- oder Flammvorbehandlung erweist sich auch bei Verwendung der Folien in Laminaten als zweckmäßig.

In einer ersten bevorzugten Ausführungsform wird eine Folie aus einem Random-Copolymer aus 70 bis 90 Gew.-% Propylen und 10 bis 30 Gew.-% Ethylen und bis zu 20 Gew.-% Additiven eingesetzt. Es versteht sich, dass sich die Anteile zu 100 % addieren. Vorzugsweise hat das Copolymer einen MFR (230 °C, 2,16 kg, ISO 1133) von 1,0 bis 2,0 g/10 min, vorzugsweise 1,5 g/10 min. Die Dichte liegt bevorzugt bei 0,90 bis 0,91 g/cm³, vorzugsweise 0,905 g/cm³. Es kann sich um nukleierte Polymere handeln. Dem Copolymer können als Additive z.B. Antiblockmittel, Slipmittel und/oder Verarbeitungshilfsmittel zugesetzt werden.

In einer zweiten bevorzugten Ausführungsform enthält die Folie eine Mischung (Blend) aus 50 bis 90 Gew.-% Polypropylen und 50 bis 10 Gew.-% Polyethylen sowie gegebenenfalls bis zu 10 % Additiven. Die Anteile addieren sich dabei wiederum zu 100 %. Als Polypropylen eignen sich dabei Propylenhomopolymere, z.B. mit einem MFR (230 °C, 2,16 kg, ISO 1133) von 1,0 bis 2,5 g/10 min, vorzugsweise 1,2 bis 2,0 g/10min und einer Dichte 0,900 bis 0,910 g/cm³, vorzugsweise 0,905 g/cm³. Bevorzugt handelt es sich um Polypropylen-Random Copolymere, beispielweise mit einem MFR (230 °C, 2,16 kg, ISO 1133) von 0,3 bis 3,0 g/10 min, vorzugsweise 1,5 g/10min und einer Dichte 0,900 bis 0,910 g/cm³, vorzugsweise 0,905 g/cm³. Weiter sind heterophasische Propylen-Copolymere (heco-PP), z.B. mit einem MFR (230 °C, 2,16 kg, ISO 1133) von 0,3 bis 3,0 g/10 min, vorzugsweise 0,8 g/10 min und einer Dichte von 0,900 bis 0,910 g/cm³, vorzugsweise 0,905 g/cm³ bevorzugt. Auch Polypropylen-Impact-Copolymere mit und ohne Nukleierungsmittel, mit einem MFR (230 °C, 2,16 kg, ISO 1133) von 0,3 bis 3,0 g/10 min, vorzugsweise 3,0 g/10 min und einer Dichte von 0,900 bis 0,910 g/cm³, vorzugsweise 0,905 g/cm³, sind sehr gut brauchbar.

Das Polyethylen ist vorzugsweise ein lineares Polyethylen niederer Dichte, LLDPE. LLDPE sind Copolymere aus Ethylen und α-Olefinen, insbesondere α-Olefinen mit 4 bis 10 C-Atomen. Erfindungsgemäß sind Buten, Hexen und Okten als Comonomer bevorzugt, insbesondere Okten. Besonders bevorzugt wird mittels Metallocen-Katalysator hergestelltes LLDPE eingesetzt (als m-LLDPE bezeichnet). Der MFR (190 °C, 2,16 kg, ISO 1133) liegt typischerweise bei 1 bis 1,3 g/10 min, die Dichte im Bereich von 0,880 bis 0,940 g/cm³, vorzugsweise bei 0,918 bis 0,922 g/cm³.

Der Mischung können als Additive z.B. Antiblockmittel, Slipmittel und/oder Verarbeitungshilfsmittel zugesetzt werden.

In einer dritten bevorzugten Ausführungsform ist die Folie eine mehrlagige Folie mit mindestens einer ersten Schicht aus Polyethylen und einer zweiten Schicht aus Polypropylen.

Als Polypropylen eignen sich dabei Propylenhomopolymere, z.B. mit einem MFR von 1,0 bis 2,5 g/10 min, vorzugsweise 1,2 bis 2,0 g/10min und einer Dichte von 0,900 bis 0,910 g/cm³, vorzugsweise 0,905 g/cm³. Bevorzugt handelt es sich um Polypropylen-Random Copolymere, beispielweise mit einem MFR (230 °C, 2,16 kg, ISO 1133) von 0,3 bis 3,0 g/10 min, vorzugsweise 1,5 g/10min und einer Dichte 0,900 bis 0,910 g/cm³, vorzugsweise 0,905 g/cm³, oder Polypropylen-Impact-Copolymere mit und ohne Nukleierungsmittel, mit einem MFR (230 °C, 2,16 kg, ISO 1133) von 0,3 bis 3,0 g/10 min, vorzugsweise 3,0 g/10 min und einer Dichte von 0,900 bis 0,910 g/cm³, vorzugsweise 0,905 g/cm³. Weiter sind heterophasische Propylen-Copolymere (heco-PP), z.B. mit einem MFR (230 °C, 2,16 kg, ISO 1133) von 0,3 bis 3,0 g/10 min, vorzugsweise 0,8 g/10min und Dichte von 0,900 bis 0,910 g/cm³, vorzugsweise 0,905 g/cm³ bevorzugt. Dem Propylen können bis zu 50 Gew.-%, vorzugsweise bis zu 30 Gew.-% Polyethylen zugesetzt werden. Bevorzugt sind Polypropylene mit 10 bis 30 Gew.-% Polyethylen, insbesondere Metallocen-katalysiert hergestelltem linearen Polyethylen niederer Dichte. Dem Polypropylen können als Additive z.B. Antiblockmittel, Slipmittel und/oder Verarbeitungshilfsmittel zugesetzt werden.

Das Polyethylen ist vorzugsweise ein lineares Polyethylen niederer Dichte, LLDPE. LLDPE sind Copolymere aus Ethylen und α-Olefinen, insbesondere α-Olefinen mit 4 bis 10 C-Atomen. Erfindungsgemäß sind Buten, Hexen und Okten als Comonomer bevorzugt, insbesondere Okten. Besonders bevorzugt wird mittels Metallocen-Katalysator hergestelltes LLDPE eingesetzt. Der MFR (190 °C, 2,16 kg, ISO 1133) liegt typischerweise bei 1 bis 1,3 g/10 min, die Dichte im Bereich von 0,880 bis 0,947 g/cm³, vorzugsweise bei 0,918 bis 0,927 g/cm³. Ein weiteres bevorzugtes Polyethylen ist Ethylenvinylacetat, mit 2,5 bis 15 Gew.-%, insbesondere 4 bis 9 Gew.-% Vinylacetat und vorzugsweise einem MFR (190 °C, 2,16 kg, ISO 1133)von 0,6 bis 2,0 g/10 min. Dem Polyethylen können als Additive z.B. Antiblockmittel, Slipmittel und/oder Verarbeitungshilfsmittel zugesetzt werden.

Es ist bevorzugt, wenn die Folie eine dreischichtige Folie ist, mit einer mittleren Lage aus Polypropylen und zwei äußeren Lagen aus Polyethylen. Hierbei betragen die Dickenverhältnisse vorzugsweise von 1:8:1 bis 1:1:1.

Zur Herstellung der erfindungsgemäßen Verpackungen wird eine erfindungsgemäße Folie, wie oben beschrieben, in an sich bekannter Weise zu einem Beutel verarbeitet. Vorzugsweise handelt es sich um eine vertikale FFS-Verpackung, bei welcher zunächst aus der Flachfolie ein Schlauch geschweißt wird. Dies kann entweder im Wärmekontaktverfahren oder vorzugsweise mittels Ultraschall-Schweißtechnik erfolgen. Sodann wird mittels Ultraschall-Schweißtechnik eine erste Quernaht geschweißt, das Füllgut eingefüllt und mittels Ultraschall-Schweißtechnik die Verpackung verschlossen und von dem restlichen Folienschlauch getrennt. Vorzugsweise erfolgen die Schweißung zum Schlauch und alle weiteren Schritte in direkter Abfolge nacheinander. Es ist aber durchaus möglich, die Herstellung des Folienschlauches separat durchzuführen. Weiter ist es auch möglich, die Folie auf einer horizontalen Schlauchbeutelanlage mit Querschweißstation zu verwenden. Hierbei läuft die Folie über ein Faltschwert und wird zu einem Schlauch geformt, das Produkt wird "horizontal" eingespeist und dann werden die Quernähte geschweißt.

Ein besonderer Vorteil der erfindungsgemäßen Folien und damit auch der entsprechenden Verpackungen ist die einfache Herstellung in einem Arbeitsschritt. Die Folien eignen sich aber auch zur Lamination mit anderen Schichten, wie z.B. Aluminium, Polyethylenterephthalat, Polypropylen, Polyamid oder Papier.

Die Erfindung soll anhand der folgenden Beispiele näher erläutert werden, ohne jedoch auf die konkret beschriebenen Ausführungsformen beschränkt zu sein. Alle Prozentangaben und Teile beziehen sich, soweit nichts anderes angegeben ist, auf das Gewicht. Die Angaben zu Dichte und MFR sowie gegebenenfalls zu Comonomeren sind den Datenblättern der Hersteller entnommen.

### Beispiele

### Messmethoden:

### 1. Schmelzpunkt

Die Schmelzpunkte wurden wie oben beschrieben an Proben der Folien bestimmt. Es wurden 3 Messungen durchgeführt und der Mittelwert gebildet.

### 2. Siegelnahtfestigkeit

Aus der Folie wurden 15 mm breite Streifen in Längsrichtung geschnitten und über die gesamte Länge mit einer Siegelnaht im Ultraschallschweißverfahren versehen. Einstellungen: Schweißzeit 150 ms, Amplitude 100 %, 1,2 bar, Radius 2,5°, Haltezeit 20 ms. Entsprechend der Vorschrift Merkblatt 33 FHG wurden die Siegelnahtfestigkeiten ermittelt. Es sind jeweils die Mittelwerte aus 5 Messungen angegeben.

### 3. Haze

Die Transparenz ist bei Verpackungen eine sehr wichtige Eigenschaft. Die erfindungsgemäßen Folien zeigen überraschenderweise auch in dieser Hinsicht Vorteile. Als Maß für die Transparenz wurde der Haze gemäß ASTM D 1003 bestimmt (M57D Spherical Hazemeter).

### 4. Schmelzflussrate

Die Schmelzflussrate (MFR) nach ISO 1133 wurde aus den Angaben der Hersteller übernommen, bei Polypropylenen erfolgt die Messung bei 230 °C und 2,16 kg, bei Polyethylenen bei 190°C und 2,16 kg.

### Beispiel 1

Eine Folie wurde aus 70 Gew.-% Propylen-Random-Copolymer (MFR bei 230 °C, 2,16 kg = 1,5 g/10min; Dichte 0,905 g/cm³) und 30 Gew.-% m-LLDPE (Comonomer: Hexen, MFR bei 190 °C, 2,16 kg = 1,0 g/10 min; Dichte 0,918 g/cm³) blasextrudiert. Das Aufblasverhältnis betrug 1:2, der Spalt wurde auf 1,0 mm eingestellt, die Temperatur des Polypropylens lag während der Extrusion bei 210 bis 240 °C. Die Dicke betrug 50 µm.

Entsprechend der Vorschrift Merkblatt 33 FHG wurde eine Siegelnahtfestigkeit von 15 N/15 mm bestimmt.

### Beispiel 2

Aus 80 Gew.-% Propylen-Random-Copolymer(MFR bei 230 °C, 2,16 kg = 1,5 g/10 min; Dichte 0,905 g/cm³) und 20 Gew.-% m-LLDPE (Comonomer: Hexen, MFR bei 190 °C, 2,16 kg = 1,0 g/10 min; Dichte 0,918 g/cm³) wurde analog Beispiel 1 eine Folie hergestellt. Die Dicke betrug 60 µm und die Siegelnahtfestigkeit 19 N/15 mm.

### Beispiel 3

Aus einem Propylen-Random-Copolymer (7 % Ethylen, MFR bei 230 °C, 2,16 g = 1,5 g/10 min; Schmelztemperatur 143 - 147 °C, Dichte 0,905 g/cm³) wurde analog Beispiel 1 eine Folie hergestellt. Die Dicke betrug 35 µm und die Siegelnahtfestigkeit 16 N/ 15 mm.

### Beispiel 4

Aus einem heterophasischen Propylencopolymer (7 % Ethylen, MFR bei 230 °C, 2,16 kg = 0,8 g/10 min, Dichte 0,905 g/cm³) wurde analog Beispiel 1 eine Folie hergestellt. Die Dicke betrug 40 µm und die Siegelnahtfestigkeit 15 N/15 mm .

### Beispiel 5

Eine drei-lagige Folie wurde analog zu Beispiel 1 coextrudiert. Die erste und dritte Schicht bestand jeweils aus einer Mischung von 80 Gew.-% Ethylenvinylacetat (MFR bei 190 °C, 2,16 kg = 2,0 g/10 min; < 5 Gew.-% Vinylacetat) und 20 Gew.- % m-LLDPE (Comonomer: Hexen, MFR bei 190 °C, 2,16 kg = 1,0 g/10 min; Dichte 0,918 g/cm³), die mittlere Schicht aus Propylen-Random-Copolymer (MFR bei 230 °C, 2,16 kg = 1,5 g/10 min; Dichte 0,905 g/cm³). Die Dicke betrug 60 µm und die Siegelnahtfestigkeit 16 N/15 mm.

### Beispiel 6

Eine dreilagige Folie wurde analog zu Beispiel 1 coextrudiert. Die erste und dritte Schicht bestand jeweils aus m-LLDPE (Comonomer: Hexen, MFR bei 190 °C, 2,16 kg = 1,0 g/10 min; Dichte 0,918 g/cm³), die mittlere Schicht aus heterophasischem Propylen-Random-Copolymer (MFR bei 230 °C, 2,16 kg = 3,0 g/10 min; Dichte 0,905 g/cm³). Die Dicke betrug 60 µm und die Siegelnahtfestigkeit 17 N/15 mm.

### Beispiel 7 (Vergleich)

Aus einer Mischung aus 80 Gew.-% Ethylenvinylacetat (MFR bei 190 °C, 2,16 kg = 2,0 g/10 min; < 5 Gew.-% Vinylacetat) und 20 Gew.-% LLDPE (Comonomer: Okten, MFR bei 190 °C, 2,16 kg = 0,9 g/10 min, Dichte 0,919 g/cm³) wurde analog Beispie 1 eine Folie hergestellt. Die Siegelnahtfestigkeit betrug 7 N/15 mm. Bei dieser Kraft schälte sich die Naht auf.

### Beispiel 8 (Vergleich)

Aus einem Ethylencopolymer (LLDPE, Comonomer: Okten, MFR bei 190 °C, 2,16 kg = 0,9.g/10 min, Dichte 0,919 g/cm³) wurde analog Beispie 1 eine Folie hergestellt. Die Siegelnahtfestigkeit betrug 11 N/15 mm. Bei dieser Kraft schälte sich die Naht auf. Im DSC war nur ein Schmelzpunkt messbar, d.h. der Schmelzpunktunterschied muss geringer als 5 K sein.

### Beispiel 9 (Vergleich)

Eine dreilagige Folie wurde analog zu Beispiel 1 coextrudiert. Die erste Schicht bestand aus LLDPE (Comonomer: Buten, MFR bei 190 °C, 2,16 kg = 1,0 g/10 min, Dichte 0,918 g/cm³), die mittlere Schicht aus Polyethylen hoher Dichte (MFR bei 190 °C, 2,16 kg = 0,9 g/10 min, Dichte 0,953 g/cm³) und die dritte Schicht aus LLDPE (Comonomer: Okten, MFR bei 190°C, 2,16 kg = 0,9 g/10 min, Dichte 0,919 g/cm³). Die Siegelnahtfestigkeit betrug 5 N/15 mm. Bei dieser Kraft schälte sich die Naht auf.

Die mittels DSC bestimmten Schmelztemperaturen der Haupt- bzw. Überschusskomponente (Tₘ 1) und der zweiten Komponente (Tₘ 2) und die Siegelnahtfestigkeiten für die Folien aller Beispiele und Vergleichsbeispiele sind nochmals in Tabelle 1 zusammengefasst. Zusätzlich ist der Haze angegeben und welches Verhalten die Siegelnaht bei maximal möglicher Belastung zeigte.

**Tabelle 1**

| Beispiel | Tₘ 1 [°C] | Tₘ 2 [°C] | Δ Tm [°C] | Siegelnaht-festigkeit [N/15mmm] | Verhalten bei max. Belastung | Haze |
|---|---|---|---|---|---|---|
| Blend: | | | | | | |
| 1 | 142 | 119 | 23 | 15 | Dehnung | 8,6 |
| 2 | 144 | 119 | 25 | 19 | Dehnung | 9,4 |
| V 7 | 104 | 121 | -17 | 7 | Peel | 11,5 |

| Copolymer: | | | | | | |
|---|---|---|---|---|---|---|
| 3 | 144 | 130 | 14 | 16 | Dehnung | 7,6 |
| 4 | 162 | 111 | 51 | 15 | Dehnung | 43,0 |
| V 8 | 123 | - | - | 11 | Peel | 16,2 |

| Coextrudierte Folie: | | | | | | |
|---|---|---|---|---|---|---|
| 5 | 162 | 111 | 51 | 16 | Dehnung | 14,0 |
| 6 | 161 | 119 | 42 | 17 | Dehnung | 7,3 |
| V 9 | 133 | 121 | 12 | 5 | Peel | 13,3 |

Man erkennt, dass die erfindungsgemäßen Folien durchweg deutlich höhere Siegelnahtfestigkeiten aufweisen und auch bei einem Versagen nicht die Siegelnaht aufgeschält wird (Peel) sondern sich die Folie dehnt. Weiterhin ist es mit den Folien der Erfindung möglich, die Transparenz im Vergleich zu den derzeit im Wärmekontaktverfahren oder als Kaschierfolie genutzten Folien weiter zu verbessern, was sich an den niedrigeren Haze-Werten zeigt. Wie die Beispiele zeigen, kommt es nicht allein auf den Schmelzpunktsunterschied an, sondern auch darauf, dass die Hauptkomponente den höheren Schmelzpunkt aufweist. Der Unterschied kann bei Copolymeren etwas geringer sein als bei den Mischungen oder coextrudierten Folien.

## Patentansprüche

1. Verwendung einer Folie, die ein Propylencopolymer enthält mit einem Anteil von 1 bis 30 Gew-% Ethylenmonomeren, wobei dem Propylenanteil ein um mindestens 13 K höher liegender Peak im DSC entspricht als dem Ethylenanteil, oder einer Folie aus einer Mischung aus 50 bis 90 Gew.-% eines Polypropylens und 10 bis 50 Gew.-% eines Polyethylens, wobei dem Polypropylen ein um mindestens 20 K höher liegender Peak im DSC entspricht als dem Polyethylen, oder einer coextrudierte Folie, die mindestens eine erste Lage aus Polyethylen und eine zweite Lage aus Polypropylen umfasst, wobei dem Polypropylen ein um mindestens 20 K höher liegender Peak im DSC entspricht als dem Polyethylen zur Herstellung von Verpackungen mittels Ultraschall-Schweißtechnik.

2. Verwendung gemäß Anspruch 1, **dadurch gekennzeichnet, dass** das Propylencopolymer ein Random-Copolymer aus 70 bis 90 Gew.-% Propylen und 10 bis 30 Gew.-% Ethylen ist.

3. Verwendung gemäß Anspruch 1, **dadurch gekennzeichnet, dass** die Mischung als Polypropylen ein Polypropylen-Random Copolymer oder ein heterophasisches Propylen-Copolymer oder ein Propylen-Impact-Copolymer enthält.

4. Verwendung gemäß Anspruch 3, **dadurch gekennzeichnet, dass** die Mischung als Polyethylen ein lineares Polyethylen niederer Dichte enthält.

5. Verwendung gemäß Anspruch 1, **dadurch gekennzeichnet, dass** die erste Lage der Folie ein Propylen-Random-Copolymer oder ein heterophasisches Propylen-Copolymer oder ein Polypropylen-Impact-Copolymer enthält.

6. Verwendung gemäß Anspruch 1 oder 5, **dadurch gekennzeichnet, dass** die erste Lage der Folie ein Polypropylen im Gemisch mit bis zu 50 Gew.-% Polyethylen enthält.

7. Verwendung gemäß Anspruch 1, **dadurch gekennzeichnet, dass** die zweite Lage der Folie ein lineares Polyethylen niederer Dichte enthält.

8. Verwendung gemäß Anspruch 6, **dadurch gekennzeichnet, dass** die zweite Lage der Folie bis zu 40 Gew.-% Polyethylen niederer Dichte und/oder Ethylenvinylacetat enthält.

9. Verwendung gemäß Anspruch 5, 6 oder 7, **dadurch gekennzeichnet, dass** die Folie eine zweilagige Folie ist.

10. Verwendung gemäß Anspruch 5, 6 oder 7, **dadurch gekennzeichnet, dass** die Folie eine dreilagige Folie, mit einer mittleren Lage aus Polypropylen und zwei äußeren Lagen aus Polyethylen, ist.

11. Verwendung gemäß Anspruch 10, **dadurch gekennzeichnet, dass** das Dickenverhältnis der Lagen 1:8:1 bis 1:1:1 beträgt.

12. Verwendung gemäß einem der vorhergehenden Ansprüche, **dadurch gekennzeichnet, dass** die Dicke der Folie im Bereich von 30 bis 200 µm liegt.

13. Verwendung gemäß einem der vorhergehenden Ansprüche, **dadurch gekennzeichnet, dass** die Folie bzw. eine oder mehrere Lagen der Folie übliche Additive enthält.

14. Verwendung gemäß einem der vorhergehenden Ansprüche, **dadurch gekennzeichnet, dass** die Schmelztemperatur der niedriger schmelzenden Komponente mindestens 100°C, vorzugsweise mindestens 110 °C beträgt.

15. Verpackungsbeutel erhalten gemäß einem der Ansprüche 1 bis 14 mittels Ultraschall-Schweißtechnik.

## Claims

1. Use of a film containing a propylene copolymer with a content of 1 to 30 w/w percent of ethylene monomers, wherein the peak in the DSC corresponding to the propylene content is at least 13 K higher than that corresponding to the ethylene content, or of a film consisting of a mixture of 50 to 90 w/w percent of a polypropylene and 10 to 50 w/w percent of a polyethylene, wherein the peak in the DSC corresponding to the polypropylene is at least 20 K higher than that corresponding to the polyethylene, or of a coextruded film comprising at least one first layer of polyethylene and one second layer of polypropylene, wherein the peak in the DSC corresponding to the polypropylene is at least 20 K higher than that corresponding to the polyethylene, for the manufacture of packages by means of the ultrasonic welding method.

2. Use according to Claim 1, **characterized in that** the propylene copolymer is a random copolymer consisting of 70 to 90 w/w percent of propylene and 10 to 30 w/w percent of ethylene.

3. Use according to Claim 1, **characterized in that** the polypropylene contained in the mixture is a polypropylene random copolymer or a heterophasic propylene copolymer or a propylene impact copolymer.

4. Use according to Claim 3, **characterized in that** the polyethylene contained in the mixture is a linear low-density polyethylene.

5. Use according to Claim 1, **characterized in that** the first layer of the film contains a propylene random copolymer or a heterophasic propylene copolymer or a polypropylene impact copolymer.

6. Use according to Claim 1 or 5, **characterized in that** the first layer of the film contains a polypropylene in a mixture with up to 50 w/w percent of polyethylene.

7. Use according to Claim 1, **characterized in that** the second layer of the film contains a linear low-density polyethylene.

8. Use according to Claim 6, **characterized in that** the second layer of the film contains up to 40 w/w percent of low-density polyethylene and/or ethylene vinyl acetate.

9. Use according to Claim 5, 6 or 7, **characterized in that** the film is a two-layer film.

10. Use according to Claim 5, 6 or 7, **characterized in that** the film is a three-layer film, with a central layer of polypropylene and two outer layers of polyethylene.

11. Use according to Claim 9, **characterized in that** the thickness ratio of the layers is 1:8:1 to 1:1:1.

12. Use according to anyone of the preceding claims, **characterized in that** the thickness of the film ranges from 30 to 200 µm.

13. Use according to anyone of the preceding claims, **characterized in that** the film or one or more layers of the film contain(s) usual additives.

14. Use according to anyone of the preceding claims, **characterized in that** the melting temperature of the lower melting component is at least 100 °C, preferrably at least 110 °C.

15. Packaging bag obtained according to anyone of Claims 1 to 14 by means of the ultrasonic welding method.

## Revendications

1. Utilisation d'une feuille mince qui contient un copolymère de propylène, possédant une fraction de monomère d'éthylène à concurrence de 1 à 30 % en poids, dans laquelle, à la fraction du propylène, correspond un pic, dans la DSC, supérieur à concurrence d'au moins 13 K à celui de la fraction de l'éthylène, ou bien d'une feuille mince constituée d'un mélange d'un polypropylène à concurrence de 50 à 90 % en poids et d'un polyéthylène à concurrence de 10 à 50 % en poids, dans laquelle, au polypropylène, correspond un pic, dans la DSC, supérieur à concurrence d'au moins 20 K à celui du polyéthylène, ou encore d'une feuille mince coextrudée qui comprend au moins une première couche de polyéthylène et une deuxième couche de polypropylène, dans laquelle, au polypropylène, correspond un pic, dans la DSC, supérieur à concurrence d'au moins 20 K à celui du polyéthylène, pour la fabrication de conditionnements au moyen d'une technique de soudage par ultrasons.

2. Utilisation selon la revendication 1, **caractérisée en ce que** le copolymère de propylène est un copolymère statistique de propylène à concurrence de 70 à 90 % en poids et d'éthylène à concurrence de 10 à 30 % en poids.

3. Utilisation selon la revendication 1, **caractérisée en ce que** le mélange contient, à titre de polypropylène, un copolymère statistique de polypropylène ou un copolymère de propylène hétérophasique ou encore un copolymère de propylène qui a été modifié pour pouvoir résister aux chocs.

4. Utilisation selon la revendication 3, **caractérisée en ce que** le mélange contient, à titre de polyéthylène, un polyéthylène linéaire basse densité.

5. Utilisation selon la revendication 1, **caractérisée en ce que** la première couche de la feuille mince contient un copolymère statistique de propylène ou un copolymère de propylène hétérophasique ou un copolymère de polypropylène qui a été modifié pour pouvoir résister aux chocs.

6. Utilisation selon la revendication 1 ou 5, **caractérisée en ce que** la première couche de la feuille mince contient un polypropylène en mélange avec du polyéthylène jusqu'à concurrence de 50 % en poids.

7. Utilisation selon la revendication 1, **caractérisée en ce que** la deuxième couche de la feuille mince contient un polyéthylène linéaire basse densité.

8. Utilisation selon la revendication 6, **caractérisée en ce que** la deuxième couche de la feuille mince contient, jusqu'à concurrence de 40 % en poids, du polyéthylène basse densité et/ou de l'éthylène/acétate de vinyle.

9. Utilisation selon la revendication 5, 6 ou 7, **caractérisée en ce que** la feuille mince est une feuille mince à double couche.

10. Utilisation selon la revendication 5, 6 ou 7, **caractérisée en ce que** la feuille mince est une feuille mince à triple couche, comprenant une couche médiane en polypropylène et deux couches externes en polyéthylène.

11. Utilisation selon la revendication 9, **caractérisée en ce que** le rapport des épaisseurs des couches s'élève de 1 : 8 : 1 à 1 : 1 : 1.

12. Utilisation selon l'une quelconque des revendications précédentes, **caractérisée en ce que** l'épaisseur de la feuille mince se situe dans la plage de 30 à 200 µm.

13. Utilisation selon l'une quelconque des revendications précédentes, **caractérisée en ce que** la feuille mince, respectivement une ou plusieurs couches de la feuille mince contient des additifs habituels.

14. Utilisation selon l'une quelconque des revendications précédentes, **caractérisée en ce que** la température de fusion du composant possédant le point de fusion le plus bas s'élève à au moins 100 °C, de préférence à au moins 110 °C.

15. Sachets d'emballage que l'on obtient conformément à l'une quelconque des revendications 1 à 14, au moyen d'une technique de soudage par ultrasons.
